# EUROPEAN PATENT SPECIFICATION

(11) **EP 3 656 079 B1**
(45) Date of publication and mention of the grant of the patent: **19.01.2022**
(21) Application number: 17825241.7
(22) Date of filing: 22.12.2017
(51) Int. Cl.: H04L 9/08

(54) **QUANTUM KEY DISTRIBUTION COMMUNICATION DEVICES, METHODS AND SYSTEMS**
QUANTENSCHLÜSSELVERTEILUNGSKOMMUNIKATIONSVORRICHTUNGEN, -VERFAHREN UND -SYSTEME
DISPOSITIFS, PROCÉDÉS, ET SYSTÈMES DE COMMUNICATION AVEC DISTRIBUTION DE CLÉ QUANTIQUE

(43) Date of publication of application: 27.05.2020
(73) Proprietor: Huawei Technologies Duesseldorf GmbH, 40549 Düsseldorf (DE)
(72) Inventor: FUNG, Fred, Chi, Hang, 80992 Munich (DE)
(74) Representative: Goddar, Heinz J.
(86) International application number: PCT/EP2017/084434
(87) International publication number: WO 2019/120567

(56) References cited:
- US-A1- 2004 109 564
- DAVID ELKOUSS ET AL: "Information Reconciliation for Quantum Key Distribution", ARXIV.ORG, CORNELL UNIVERSITY LIBRARY, 201 OLIN LIBRARY CORNELL UNIVERSITY ITHACA, NY 14853, 9 July 2010 (2010-07-09), XP080487652, cited in the application
- KRAUS B ET AL: "Lower and upper bounds on the secret key rate for QKD protocols using one--way classical communication", ARXIV.ORG, CORNELL UNIVERSITY LIBRARY, 201 OLIN LIBRARY CORNELL UNIVERSITY ITHACA, NY 14853, 26 October 2004 (2004-10-26), XP080171877, DOI: 10.1103/PHYSREVLETT.95.080501 cited in the application
- RAUL GARCIA-PATRON ET AL: "Continuous-variable quantum key distribution protocols over noisy channels", ARXIV.ORG, CORNELL UNIVERSITY LIBRARY, 201 OLIN LIBRARY CORNELL UNIVERSITY ITHACA, NY 14853, 24 June 2008 (2008-06-24), XP080424206, DOI: 10.1103/PHYSREVLETT.102.130501 cited in the application
- JOSEPH M RENES ET AL: "Noisy Preprocessing and the Distillation of Private States", ARXIV.ORG, CORNELL UNIVERSITY LIBRARY, 201 OLIN LIBRARY CORNELL UNIVERSITY ITHACA, NY 14853, 28 March 2006 (2006-03-28), XP080232592, DOI: 10.1103/PHYSREVLETT.98.020502

## Description

### TECHNICAL FIELD

Generally, the present invention relates to the field of quantum key distribution (QKD). More specifically, the present invention relates to QKD communication devices, methods and systems.

### BACKGROUND

In general, quantum key distribution (QKD) is based on quantum carriers (also referred to as quantum signals), typically single-photon or strongly attenuated light pulses, for sharing a secret electronic key. Typically, a sequence of such light pulses, i.e. quantum signals, is transmitted from a transmitter (often referred to as "Alice") via a quantum channel to a receiver (often referred to as "Bob"), wherein each light pulse encodes a key bit. The quantum properties of light, in particular the Heisenberg uncertainty principle, ensure that no information can be gained on these key bits without disturbing the quantum state of the photons. Public communications over an additional classical channel are then used to estimate the maximum amount of information that a potential eavesdropper (often referred to as "Eve") may have acquired, and to distil a secret key out of the raw data.

In order to support QKD in different operating environments at different bit error rates (BER) or signal-to-noise ratios (SNR), a separate error correcting (EC) code or information reconciliation scheme designed for that particular BER/SNR can be used during the operation of QKD. However, in this approach, the design problem becomes complex, since multiple codes need to be designed. Moreover, the implementation for encoding and decoding becomes complex, since multiple codes optimized for different noise levels need to be handled and this increases the hardware/software resource requirement.

Moreover, if only one EC code is used, then only a small operation range in distance is covered for generating secret keys. Even shorter distances may not be covered, since the efficiency of the EC code may drop below the threshold value required for those distances. This is in stark contrast to standard communications in which an EC code that can cover a longer distance (lower SNR) can cover a shorter distance (higher SNR). In QKD, only a distance range around the target distance for which the EC code is designed may be covered. Furthermore, if only one EC code is used, then fluctuation of the physical conditions may also bring the received signal level and the noise level outside of the operation range of the QKD system.

Different approaches exist in the prior art which aim at solving the above mentioned problem related to the small operation range in distance or noise level of the QKD system. The article, "Information Reconciliation for Quantum Key Distribution", Quantum Inform. Comput. 11, 226-238 (2011), by D. Elkouss, J. Martinez-Mateo and V. Martin, and the article "Blind Reconciliation", Quantum Inform. Comput. 12, 791-812 (2012), by J. Martinez-Mateo, D. Elkouss, and V. Martin, proposed methods for adapting an EC code to change the code rate by puncturing and shortening the code. However, a number of EC codes are still needed to cover a wide range of noise level.

Also, the key rate in QKD systems still needs to be increased, in order to allow for a bigger communication distance between QKD communication devices in QKD communication systems.

Thus, there is still a need for improved QKD communication devices, methods and systems.

### SUMMARY

It is an object of the invention to provide for improved QKD communication devices, methods, and systems.

The foregoing and other objects are achieved by the subject matter of the independent claims. Further implementation forms are apparent from the dependent claims, the description and the figures.

According to a first aspect, the invention relates to a QKD communication device comprising a communication interface configured to communicate with a further QKD communication device for generating a secret key on the basis of a signal sequence associated with a plurality of quantum signals exchanged between the QKD communication device and the further QKD communication device via a quantum communication channel. Moreover, the QKD communication device comprises a processing unit configured to determine a noise level associated with the signal sequence, increase the noise level associated with the signal sequence depending on the determined noise level associated with the signal sequence for obtaining a modified signal sequence such that the noise level associated with the modified signal sequence is larger than a predefined noise threshold value and/or falls within a predefined noise range, perform information reconciliation on the modified signal sequence for obtaining an error-free bit sequence, and generate the secret key on the basis of the error-free bit sequence.

In a possible implementation determining the noise level may comprise receiving from the further QKD communication device noise level information. Alternatively, determining the noise level may include estimating the noise level by the QKD communication device. For instance, the QKD communication device may estimate the noise level by comparing a random subset of the signals without noise and the corresponding signals with noise.

Thus, an improved QKD communication device is provided, since, for example, the generation rate of the secret key increases over a wide range of distances (including the shorter distances than the design distance of the EC code) compared to prior art solutions using one EC code. Therefore, wider ranges of operation can be covered by the QKD communication device.

An improvement of the QKD communication device is also, for example, related to the positive effect of adding noise which has been studied in prior works. The article "Lower and Upper Bounds on the Secret-Key Rate for Quantum Key Distribution Protocols Using One-Way Classical Communication", Phys. Rev. Lett. 95, 080501 (2005), by B. Kraus et al., and the article "Tight asymptotic key rate for the Bennett-Brassard 1984 protocol with local randomization and device imprecisions", Phys. Rev. A 90, 022306 (2014), by N. Gisin and R. Renner studied the effect of adding noise in discrete variable QKD (DV-QKD) and showed that the key rate can be increased. The article "Continuous-Variable Quantum Key Distribution Protocols Over Noisy Channels", Phys. Rev. Lett. 102, 130501 (2009), by R. García-Patrón and N. J. Cerf studied the effect of adding noise in squeezed-state continuous variable QKD (CV-QKD) and showed that the key rate can be increased. Furthermore, the article "Trusted Noise in Continuous-Variable Quantum Key Distribution: A Threat and a Defense", Entropy 18, 20 (2016), by V. C. Usenko and R. Filip studied the effect of adding noise in Gaussian modulation (GM) CV-QKD and showed that the key rate can be increased.

In a possible implementation form of the QKD communication device according to the first aspect, the processing unit is further configured to exchange information about the increase of the noise level associated with the signal sequence with the further QKD communication device.

In a further possible implementation form of the QKD communication device according to the first aspect, the processing unit is further configured to perform a sifting operation on the signal sequence prior to determining the noise level associated with the signal sequence.

In a further possible implementation form of the QKD communication device according to the first aspect, the processing unit is configured to generate the secret key on the basis of the modified bit sequence using a privacy amplification scheme.

Thus, an improved QKD communication device is provided, since, for example, using the privacy amplification scheme allows to improve the information confidentiality. Moreover, this provides the advantage that, by consolidating partially secure bits of the QKD communication device and of the further QKD communication device, the use of the privacy amplification scheme makes the knowledge about the secret key information obtained by an eavesdropper insignificant.

The processing unit is configured to increase the noise level associated with the signal sequence depending on the determined noise level associated with the signal sequence such that the noise level associated with the modified signal sequence is larger than a predefined noise threshold value and/or falls within a predefined noise range. The added noise is unknown to the eavesdropper and this fact together with the distribution of the added noise should be taken into account in the calculation of Eve's information which is to be removed in the privacy amplification step.

In a further possible implementation form of the QKD communication device according to the first aspect, the processing unit is configured to perform error correction on a bit sequence associated with the modified signal sequence by applying an information reconciliation scheme to the modified signal sequence, wherein the information reconciliation scheme is associated with a nominal operation noise level and/or a nominal operation noise level range and wherein the processing unit is configured to increase the noise level associated with the signal sequence depending on the determined noise level associated with the signal sequence and on the nominal operation noise level and/or the nominal operation noise level range associated with the information reconciliation scheme.

Thus, an improved QKD communication device is provided, since, for example, wide ranges of operation distances (including short distances) can be covered by using one information reconciliation scheme instead of multiple information reconciliation schemes.

In a further possible implementation form of the QKD communication device according to the first aspect, the processing unit is configured to increase the noise level associated with the signal sequence such that the increased noise level associated with the signal sequence is substantially equal to the nominal operation noise level associated with the information reconciliation scheme and/or falls within the nominal operation noise level range associated with the information reconciliation scheme.

In a further possible implementation form of the QKD communication device according to the first aspect, the noise level associated with the signal sequence is a bit error rate associated with the signal sequence, wherein the nominal operation noise level associated with the information reconciliation scheme is a nominal operation bit error rate associated with the information reconciliation scheme and/or the nominal operation noise level range associated with the information reconciliation scheme is a nominal operation bit error rate range associated with the information reconciliation scheme.

In a further possible implementation form of the QKD communication device according to the first aspect, the noise level associated with the signal sequence is a signal-to-noise ratio (SNR) associated with the signal sequence, wherein the nominal operation noise level associated with the information reconciliation scheme is a nominal operation SNR associated with the information reconciliation scheme and/or the nominal operation noise level range associated with the information reconciliation scheme is a nominal operation SNR range associated with the information reconciliation scheme.

In a further possible implementation form of the QKD communication device according to the first aspect, the processing unit is configured to increase the noise level associated with the signal sequence depending on the determined noise level associated with the signal sequence by flipping at least one bit equivalent of the signal sequence.

In a further possible implementation form of the QKD communication device according to the first aspect, the processing unit is configured to increase the noise level associated with the signal sequence depending on the determined noise level associated with the signal sequence by adding Gaussian noise to the signal sequence.

In a further possible implementation form of the QKD communication device according to the first aspect, the QKD communication device is a QKD receiver device and wherein the processing unit is configured to generate the secret key on the basis of the modified bit sequence using a reverse reconciliation scheme.

In a further possible implementation form of the QKD communication device according to the first aspect, the QKD communication device is a QKD transmitter device and wherein the processing unit is configured to generate the secret key on the basis of the modified bit sequence using a direct reconciliation scheme.

According to a second aspect, the invention relates to a QKD communication system comprising a QKD transmitter device according to the first aspect and a QKD receiver device according to the first aspect.

According to a third aspect, the invention relates to method for generating a secret key on the basis of a signal sequence associated with a plurality of quantum signals exchanged between the QKD communication device and the further QKD communication device via a quantum communication channel. The method comprises the steps of determining a noise level associated with the signal sequence, increasing the noise level associated with the signal sequence depending on the determined noise level associated with the signal sequence for obtaining a modified signal sequence, such that the noise level associated with the modified signal sequence is larger than a predefined noise threshold value and/or falls within a predefined noise range, performing information reconciliation on the modified signal sequence for obtaining a modified bit sequence, and generating the secret key on the basis of the modified bit sequence.

In a possible implementation form of the method according to the third aspect, the step of performing error correction on a bit sequence associated with the modified signal sequence comprises applying an information reconciliation scheme to the modified signal sequence, wherein the information reconciliation scheme is associated with a nominal operation noise level and/or a nominal operation noise level range and wherein the step of increasing the noise level associated with the signal sequence depending on the determined noise level associated with the signal sequence comprises increasing the noise level associated with the signal sequence depending on the determined noise level associated with the signal sequence and on the nominal operation noise level and/or the nominal operation noise level range associated with the information reconciliation scheme.

In a further possible implementation form of the method according to the third aspect, the noise level associated with the signal sequence is increased such that the increased noise level associated with the signal sequence is substantially equal to the nominal operation noise level associated with the information reconciliation scheme and/or falls within the nominal operation noise level range associated with the information reconciliation scheme.

According to a fourth aspect, the invention relates to a computer program product comprising a program code for performing the method according to the fourth aspect when executed on a computer or a processor.

The invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a QKD communication system comprising a QKD communication device according to an embodiment;
Fig. 2 shows a schematic diagram illustrating a QKD communication system comprising a QKD communication device according to an embodiment;
Fig. 3 shows a schematic diagram illustrating a QKD communication system comprising a QKD communication device according to an embodiment;
Fig. 4 shows a schematic diagram illustrating a QKD communication system comprising a QKD communication device according to an embodiment;
Fig. 5 shows a schematic diagram illustrating a performance of a QKD communication device according to an embodiment;
Fig. 6 shows a schematic diagram illustrating a performance of a QKD communication device according to an embodiment;
Fig. 7 shows a schematic diagram illustrating a performance of a QKD communication device according to an embodiment;
Fig. 8 shows a schematic diagram illustrating a performance of a QKD communication device according to an embodiment;
Fig. 9 shows a schematic diagram illustrating a performance of a QKD communication device according to an embodiment; and
Fig. 10 shows a schematic diagram of a method for generating a secret key in a QKD communication system according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

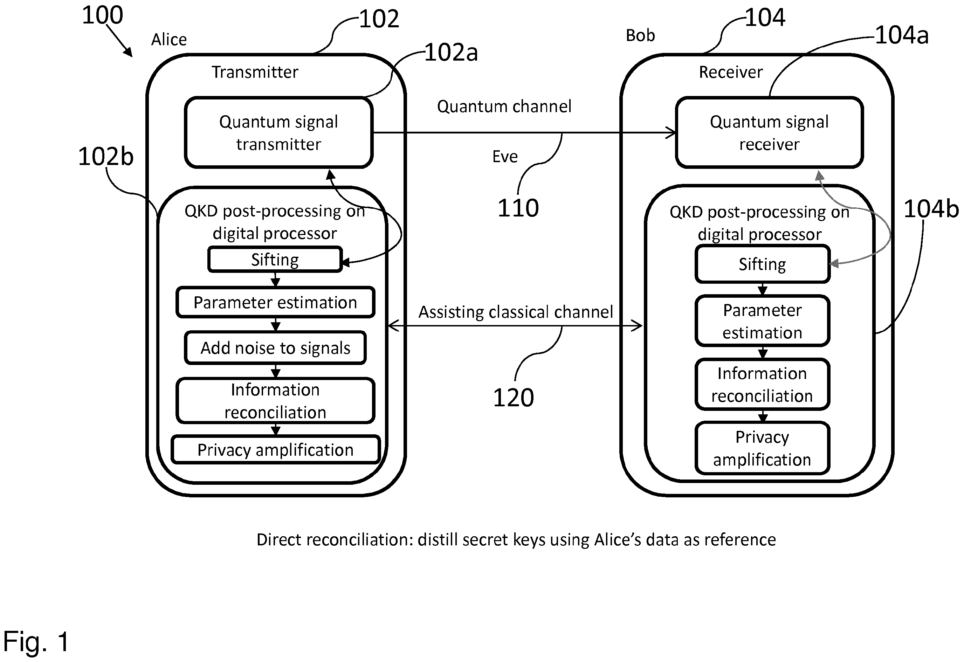

Figure 1 shows a schematic diagram illustrating a QKD communication system 100 comprising a QKD communication device 102 according to an embodiment.

The QKD communication device 102 comprises a communication interface 102a configured to communicate with a further QKD communication device 104 for generating a secret key on the basis of a signal sequence associated with a plurality of quantum signals exchanged between the QKD communication device 102 and the further QKD communication device 104 via a quantum communication channel 110. Moreover, the QKD communication device 102 comprises a processing unit 102b configured to determine a noise level associated with the signal sequence, increase the noise level associated with the signal sequence depending on the determined noise level associated with the signal sequence for obtaining a modified signal sequence, perform error correction or information reconciliation on a bit sequence associated with the modified (error free) signal sequence for obtaining a modified bit sequence, and generate the secret key on the basis of the modified bit sequence.

In the embodiment shown in figure 1, the QKD communication device 102 is a QKD transmitter device, also called Alice, while the further QKD communication device 104 is a receiver device, also called Bob. Similarly to the QKD communication device 102, the further QKD communication device 104 comprises an interface 104a and a processing unit 104b.

In this embodiment, the processing unit 102b is configured to generate the secret key on the basis of the modified bit sequence using a direct reconciliation scheme. The term direct reconciliation refers to the fact that Bob reconstructs an intermediate key sent by Alice, wherein the word intermediate refers to the fact that the key is reconstructed in an intermediate processing step before the final processing step in which the secret key is obtained. Moreover, in the direct reconciliation scheme, Alice can send error correction information to Bob, and Bob can correct his key elements in order to have the same values as Alice. Therefore, in the direct reconciliation scheme, the quantum signal QKD transmitter device 102 is said to be the reference, since the reference side is the side for which the reference data, namely the intermediate key, is regarded as correct and the opposite side tries to correct errors in its data to match the reference data. The correction information may contain partial information about Alice's intermediate key. This information may be the parity bits computed on Alice's intermediate key bits. Other known methods for correcting the intermediate key may be used, such as for instance methods using syndrome bits computed on Alice's intermediate key bits indicating a coset code (related to an error correction code) to which the key bits belong. Furthermore, Alice can send correction information in multiple rounds in which Bob can feedback some assisting information to Alice to help her optimize the correction information she will send in the next round.

In a possible implementation, the error correction information may be generated by the communication device 102 in the context of error correction or information reconciliation. The communication device 102 may, for instance, generate parity bits based on the modified signal sequence and transmit said parity bits to the other communication device 104 as error correction information. The other communication device 104 may use the error correction information to correct possible errors in the received quantum signal to match the modified signal sequence of the communication device 102.

In such a scheme, the communication device 102 and the communication device 104 may not perform any error correction or information reconciliation on their sequence if there is no error to correct. The error-free bit sequence corresponds in this case to the bit sequence on which the error correction or information reconciliation was performed.

In an embodiment, the processing units 102b and 104b can be configured to perform a sifting operation on the signal sequence prior to determining the noise level associated with the signal sequence. The sifting operation corresponds to the public discussion between Alice and Bob via the classical channel 120 where they find out whether each of Bob's measured signals is compatible with what Alice has sent, for example, by Bob announcing the measurement basis he has used for a signal. For instance, Alice generates random bit values and bases and, then, encodes the bit values as polarization states (e.g., 0°, 45°, 90°, 135°) in sequences of photons, forming the signal sequence, and sends the states via the quantum channel 110. Alice does not tell anyone the polarization of the photons she has transmitted. Bob receives the photons and measures their polarization along either a rectilinear or diagonal basis that is randomly selected with substantially equal probability. Bob records his chosen basis and his measurement results. Bob and Alice discuss via the public channel 120 which basis he has chosen to measure each photon. Bob, however, does not inform Alice of the result of his measurements. Alice tells Bob, via the public channel 120, whether he has made the measurement along the correct basis. Then, in the sifting operation, both Alice and Bob discard all cases in which Bob has made the measurement along the wrong basis and keep only the ones in which Bob has made the measurement along the correct basis.

In an embodiment, the processing unit 102b of the QKD communication device 102 is configured to increase the noise level associated with the signal sequence depending on the determined noise level associated with the signal sequence, such that the noise level associated with the modified signal sequence is larger than a predefined noise threshold value and/or falls within a predefined noise range. Moreover, the processing unit 102b can be configured to increase the noise level associated with the signal sequence such that the increased noise level associated with the signal sequence is substantially equal to the nominal operation noise level associated with the information reconciliation scheme and/or falls within the nominal operation noise level range associated with the information reconciliation scheme.

In the following the concepts of error correction and information reconciliation in the context of a QKD system will be explained in detail. This description applies to all the systems and devices described in this disclosure.

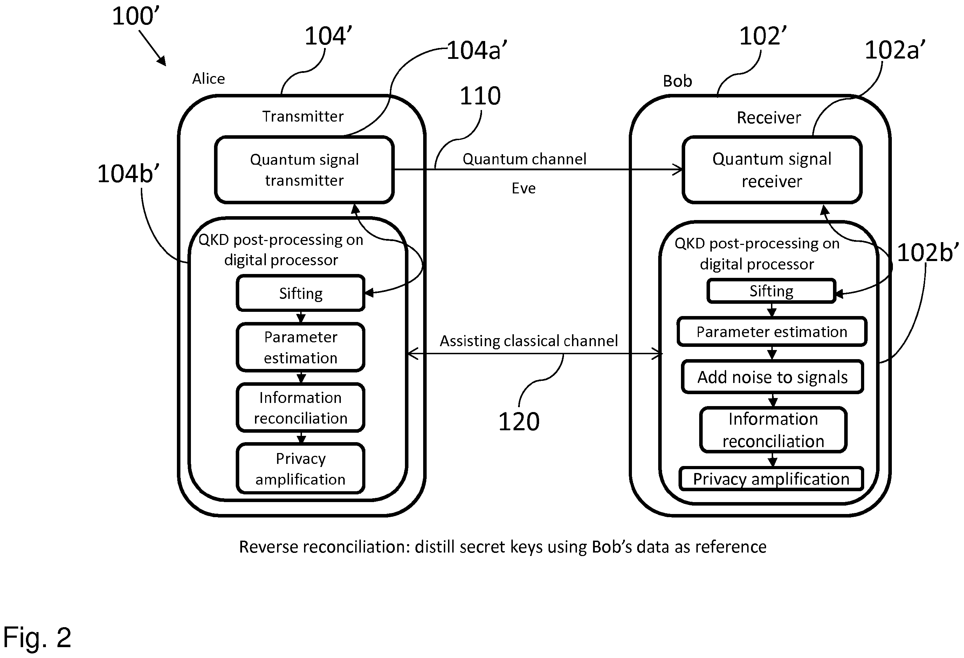

Error correction is the process by which the string of one party (for instance the communication device 102 of figure 1 or 102' of figure 2) is regarded as reference and another party (for instance the communication device 104 of figure 1 or 104' of figure 2) corrects his/her string to match it through one-way or bidirectional conversation. Information reconciliation is the process by which two parties, i.e. the communication devices 102, 102', 104', 104, extract a common string from their strings through one-way or bidirectional conversation. Thus, error correction may be regarded as a special case of information reconciliation. The two strings of the two parties are in general correlated in both error correction and information reconciliation, and in general the more correlated they are, the less communications are needed in the process.

In the following the term modified signal sequence will be explained with reference to the communication devices 102 and 104. However, this explanation holds also true for the communication devices 102' and 104'. The modified signal sequence of the communication device 102 may be generated by adding noise to the signal sequence associated with the quantum signals exchanged. Since the difference between this sequence and the signal sequence at the other communication device 104 is larger due to the added noise, more error correction information may need to be sent from the communication device 102 to the communication device 104. The error correction information contains partial information about the modified signal sequence. This information may be the parity bits computed on the modified signal sequence according to an error correction code; or some syndrome bits computed on the modified signal sequence indicating a coset code (related to an error correction code) to which the modified signal sequence belong. The computation of the parity bits and syndromes may follow the standard methods in error correction theory. Furthermore, the communication device 102 may send error correction information in multiple rounds to the other communication device 104 and in each round the communication device 104 may feedback some assisting information to the communication device 102 to help it optimize the error correction information it will send in the next round.

The communication device 104 receives the quantum signals from the communication device 102. The processing unit 104b forms a signal sequence based on the detection results of the received quantum signals. After receiving the error correction information from the processing unit 102b, the processing unit 104b uses it to check for possible errors in its signal sequence and correct them if needed to obtain a modified signal sequence such that this sequence is the same as the modified signal sequence of the processing unit 102b. Whether parity bits or syndrome bits are sent by the processing unit 102b, the processing unit 104b uses error correction decoding to find out the error pattern in its signal sequence, using the standard methods in error correction theory.

In an embodiment, the noise level associated with the signal sequence is a bit error rate associated with the signal sequence and the nominal operation noise level associated with the information reconciliation scheme is a nominal operation bit error rate associated with the information reconciliation scheme and/or the nominal operation noise level range associated with the information reconciliation scheme is a nominal operation bit error rate range associated with the information reconciliation scheme. In an alternative embodiment, the noise level associated with the signal sequence is a signal-to-noise ratio (SNR) associated with the signal sequence.

In a further embodiment, the processing unit 102b is configured to increase the noise level associated with the signal sequence depending on the determined noise level associated with the signal sequence by flipping at least one bit equivalent of the signal sequence or, in other words, the bit associated to at least one signal of the signal sequence as clarified below. The signal sequence may not be a bit sequence and a mapping may be used to convert a signal in the signal sequence to a bit. For example, the signal may be real valued and a mapping may take the sign of the signal to form a bit, and in this case flipping the bit equivalent of a signal means flipping the sign of the signal.

In a further embodiment, the processing unit 102b is configured to increase the noise level associated with the signal sequence depending on the determined noise level associated with the signal sequence by adding Gaussian noise to the signal sequence. In another embodiment, a noisy version of the signal sequence of the same length is generated.

The processing unit 102b can be configured to perform error correction on a bit sequence associated with the modified signal sequence by applying an information reconciliation scheme to the modified signal sequence, wherein the information reconciliation scheme is associated with the nominal operation noise level and/or a nominal operation noise level range. Moreover, the processing unit 102b can be configured to increase the noise level associated with the signal sequence depending on the determined noise level associated with the signal sequence and on the nominal operation noise level and/or the nominal operation noise level range associated with the information reconciliation scheme.

The other QKD communication device 104 does not need to know the amount of noise added and not even that noise was added to the signal sequence.

In an embodiment, the information reconciliation scheme is an EC code. Errors can be corrected up to a noise level which is higher than the operating range. For example, in the case of a CV-QKD system, the operation range of interest may be from 0 BER to 30% BER and EC code may be chosen which has the capability to correct up to 40% BER. It is worth noticing that the extra noise which is added can bring the data BER to the BER threshold of the EC code. This can be achieved by determining the noise level in the data, or signal sequence, in the parameter estimation step. Then, the amount of extra noise to be added can be computed based on the BER threshold of the EC code and this original noise level, essentially finding the difference between them.

The step of adding noise or increasing the noise level may not reduce the performance (the key generation rate) of the system, as it may seem at a first sight. This is due to the fact that the key generation rate is determined by both the information rate (the mutual information) between Alice and Bob, and Eve's information. A major effect of adding noise is the reduction of Eve's information since the noise is unknown to Eve, and thus the key generation rate may be improved. Therefore, it is still possible to generate a number of key bits, and sometimes even more than that of conventional methods.

In a further embodiment, the processing unit 102b and the processing unit 104b are configured to generate the secret key on the basis of the modified bit sequence using a privacy amplification scheme. Privacy amplification is a technology, through the public channel 120, used in order to improve the information confidentiality. Privacy amplification converts a weak secret string to a uniform key that is fully secret from Eve. Privacy amplification technology typically applies a random and public hash function to shorten the weak secret key and reduce the amount of information obtained by Eve as much as possible. This provides the advantage that, by consolidating partially secure bits of Alice and Bob, privacy amplification makes the knowledge about the secret key obtained by Eve insignificant.

Figure 2 shows a schematic diagram illustrating a QKD communication system 100 comprising a QKD communication device 102 according to a further embodiment.

In the embodiment shown in figure 2, the QKD communication device 102' comprises a communication interface 102a' configured to communicate with a further QKD communication device 104' for generating a secret key on the basis of a signal sequence associated with a plurality of quantum signals exchanged between the QKD communication device 102' and the further QKD communication device 104' via a quantum communication channel 110. Specifically, the signal sequence may be associated with a plurality of detection results of a plurality of quantum signals exchanged between the QKD communication device 102' and the further QKD communication device 104' via a quantum communication channel 110. Moreover, the QKD communication device 102' comprises a processing unit 102b' configured to determine a noise level associated with the signal sequence, increase the noise level associated with the signal sequence depending on the determined noise level associated with the signal sequence for obtaining a modified signal sequence, perform error correction or information reconciliation on a bit sequence associated with the modified (error free) signal sequence for obtaining a modified bit sequence, and generate the secret key on the basis of the modified bit sequence.

In the embodiment shown in figure 2, the QKD communication device 102' is a QKD receiver device and the processing unit 102b' is configured to generate the secret key on the basis of the modified bit sequence using a reverse reconciliation scheme. The reverse reconciliation scheme is based on the fact that Bob, namely the QKD communication device 102', sends error correction information to Alice and Alice, namely the further QKD communication device 104', corrects her key elements in order to have the same values as Bob. The name reverse reconciliation is due to the fact that Alice adapts herself to what was received by Bob.

While in general the communication device 102' is different than the communication device 102, the essential features of the invention are implemented in the same way in the communication device 102' and in the communication device 102. The only difference between the communication device 102' and the communication device 102 is the way the signal sequence associated with a plurality of quantum signals exchanged is derived.

Unless explicitly indicated, the functioning of the communication device 102' with regards to the error correction and to the addition of noise and privacy amplification is the same as described in figure 1 with reference to the communication device 102.

Differently than what described with reference to figure 1, the modified signal sequence of the communication device 102' may be generated by adding noise to the signal sequence associated with the detection results of the quantum signals exchanged.

The communication device 104' transmits the quantum signals to the communication device 102'. The processing unit 104b' has a signal sequence associated with the received quantum signals. After receiving the error correction information the processing unit 102b', the processing unit 104b' use it to correct errors in its signal sequence to obtain a modified signal sequence such that this sequence is the same as the modified signal sequence of the processing unit 102b'. Whether parity bits or syndrome bits are sent by the processing unit 102b', the processing unit 104b' uses error correction decoding to find out the error pattern in its signal sequence, using the standard methods in error correction theory.

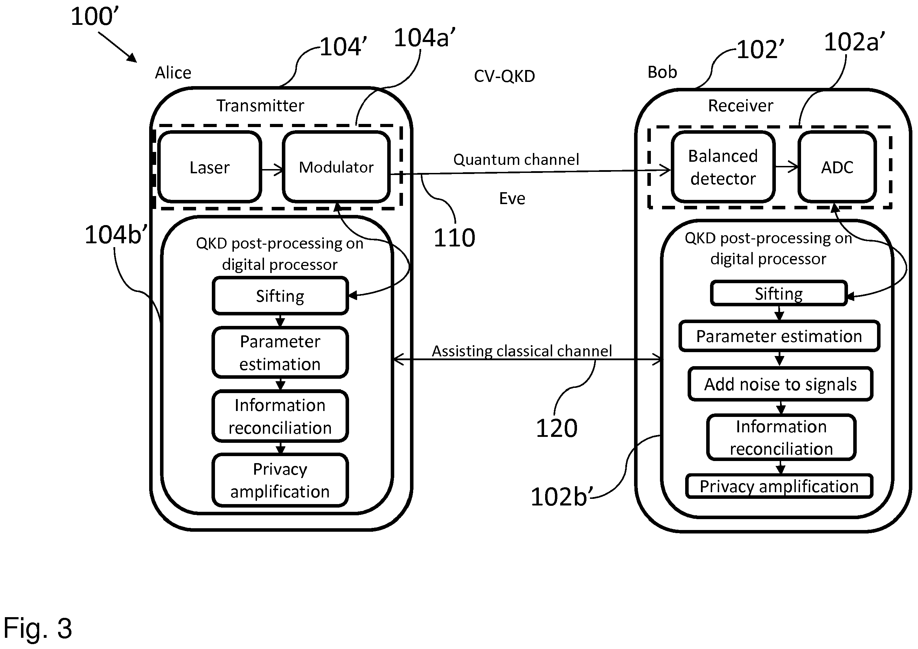

Figure 3 shows a schematic diagram illustrating the QKD communication system 100 comprising a QKD transmitter device 104' and a QKD receiver device 102' according to an embodiment. The devices and system of figure 3 build on those described with reference to figure 2. In particular, the QKD communication system 100' is described in the context of a continuous-variable QKD. According to the following disclosure, a continuous-variable QKD system builds on the communication system 100' of figure 2. However, it shall be clear that continuous-variable QKD may as well work even if implemented in the communication system 100 described in figure 1.

In the embodiment shown in figure 3, the QKD communication system 100' is a continuous-variable (CV-QKD) system. In this embodiment, the quantum information is encoded in the phase and/or amplitude of a quantum coherent state of a laser source and it is detected using a coherent receiver. Different modulation types exist such as quadrature phase shift keying (QPSK) and (quantized) Gaussian modulation.

After detecting the received signal with the interface 102a', the interface 102a' can be configured to quantize the received signal by using an analog-to-digital converter (ADC). Afterwards, the output digital signal can be processed by the QKD processing unit 102b'. In the CV-QKD system, reverse reconciliation is often used in order to reach a high distance. In this case, Bob's data is defined as the reference and noise is added on Bob's side. The parameter estimation step can determine the noise level in the current data block or signal sequence. The data can be a sequence of a real-valued numbers (or quantized real-valued numbers) corrupted by the shot noise and excess noise, both of which can follow a Gaussian distribution. The processing unit 102b' can be configured to add extra independent Gaussian noise to each data symbol to obtain a modified signal sequence so that the new signal-to-noise ratio matches the correction capability of an information reconciliation scheme. Alice and Bob then perform information reconciliation to obtain the same new signal sequence. Many information reconciliation schemes are possible. For example, in one information reconciliation scheme for QPSK modulation, Bob can compute the syndrome bits of the modified signal sequence according to a binary EC code using standard methods of error correction theory and send them to Alice. The processing unit 104b' of Alice can perform error correction on its signal sequence using the information from the syndrome bits. For example, in another information reconciliation scheme for Gaussian modulation, Bob can compute the syndrome bits of the modified signal sequence according to a non-binary EC code using standard methods of error correction theory and send them to Alice. The processing unit 104b' of Alice can perform error correction on its signal sequence using the information from the syndrome bits. For example, in another information reconciliation method for Gaussian modulation, Alice and Bob apply a mapping to their respective signal sequences at the beginning of the information reconciliation step to obtain new bit sequences. Bob can compute the syndrome bits of the new bit sequence according to a binary EC code using standard methods of error correction theory and send them to Alice. The processing unit 104b' of Alice can perform error correction on its signal sequence using the information from the syndrome bits.

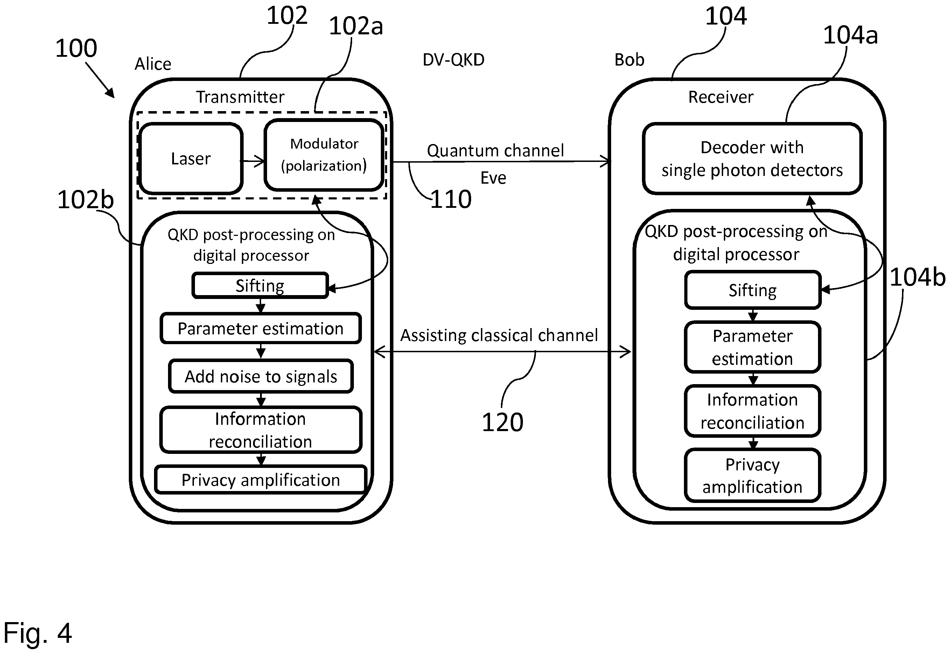

Figure 4 shows a schematic diagram illustrating a QKD communication system 100 comprising a QKD transmitter device 102 and a QKD receiver device 104 according to an embodiment. The devices and system of figure 4 build on those described with reference to figure 1. In particular, the QKD communication system 100 is described in the context of a discrete-variable QKD. According to the following disclosure, a discrete-variable QKD system builds on the communication system 100 of figure 1. However it shall be clear that discrete-variable QKD may as well work if implemented on the communication system 100' described in figure 2.

In the embodiment shown in figure 4, the QKD communication system 100 is a discrete-variable QKD (DV-QKD) communication system. The quantum information may be encoded in the phase or polarization of single photons. The information can be detected by the communication interface 104a of the receiver 104 by means of single photon detectors. In general, in DV-QKD communication systems, direct reconciliation and reverse reconciliation both can achieve long distance. In the embodiment shown in figure 4, the former case is shown. The data at the communication device 102 is a bit sequence (i.e., a sequence of binary numbers). The data at the communication device 104 is a bit sequence which may be corrupted by noises possibly due to the channel and dark counts of the detector. The processing unit 102b can be configured to add extra independent binary noise to each data symbol to obtain a modified bit sequence, so that the new BER matches the correction capability of an information reconciliation scheme. Alice and Bob then perform information reconciliation to obtain the same new bit sequence. For example, in one information reconciliation scheme, Alice can compute the syndrome bits of the modified bit sequence according to a binary EC code using standard methods of error correction theory and send them to Bob. The processing unit 104b of Bob can perform error correction on its bit sequence using the information from the syndrome bits.

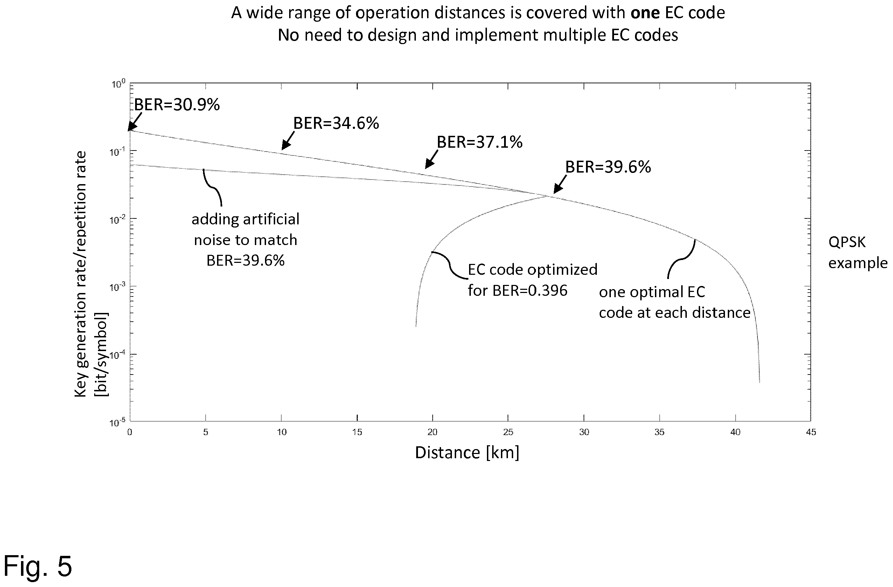

Figure 5 shows a schematic diagram illustrating a performance of the QKD communication device 102 according to an embodiment.

In figure 5, the key generation rate/repetition rate (in bit/symbols) is shown as a function of the distance in km for a CV-QKD system, in the case a quadrature phase shift keying (QPSK) modulation is used. As it can be seen in figure 5, in the embodiment in which one EC code is used with a reverse reconciliation scheme, in particular an EC code designed for BER = 0.396, after adding artificial noise to the data, a large range of distances is covered (0 km to about 27 km). This increases the range from the original range of about 19 to 27 km. This provides the advantage, that there is no need to design and implement multiple EC codes to cover a wide distance range. Therefore, by using one EC code, a wide range of operation conditions is covered, which may stem from the different deployment settings (such as distance), or fluctuations of signals and noises.

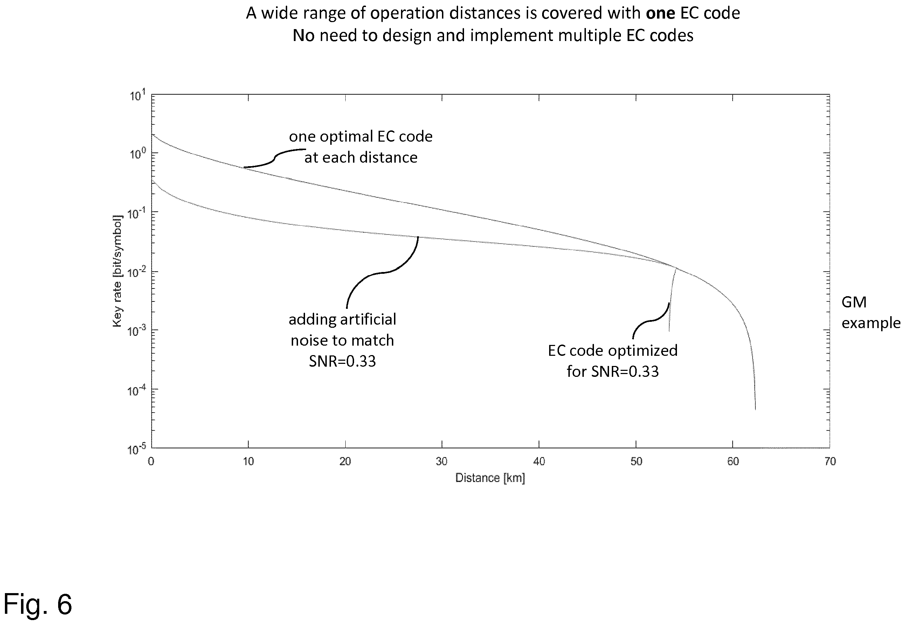

Figure 6 shows, similarly to figure 5, the key generation rate/repetition rate (in bit/symbols) as a function of the distance in km for a CV-QKD system, but in the case a Gaussian modulation is used. In this case as well, a wide range of operation is covered in the case only one EC code is used with a reverse reconciliation scheme along with the adding artificial noise step. This provides the advantage that there is no need to design and implement multiple EC schemes.

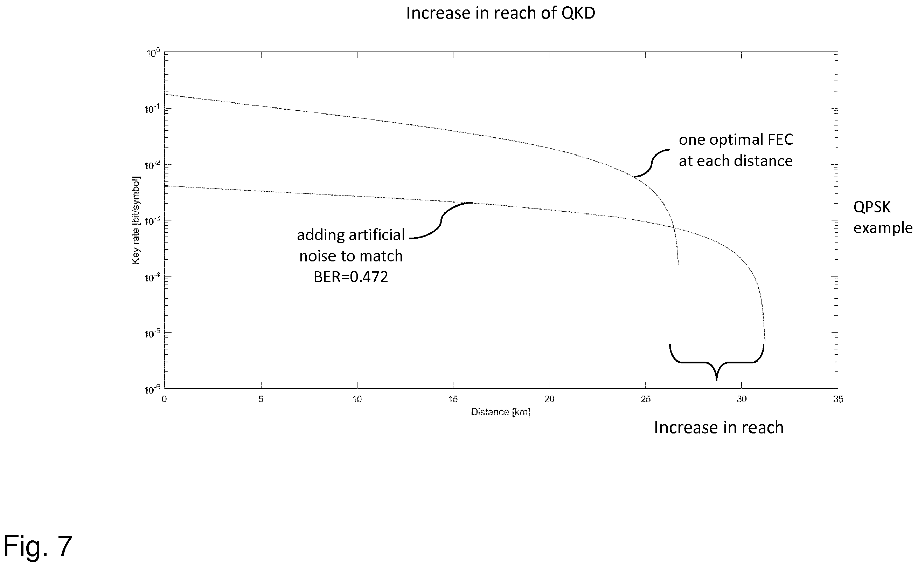

Figure 7 shows a schematic diagram illustrating a performance of the QKD communication device 102 according to an embodiment.

In figure 7, the key rete in bits/symbols is shown as a function of the distance in km for a CV-QKD system, in the case a quadrature phase shift keying (QPSK) modulation is used. As it can be seen in figure 7, in the case noise is added to match a bit error rate equal to 0.472, there is a significant increase in the distance.

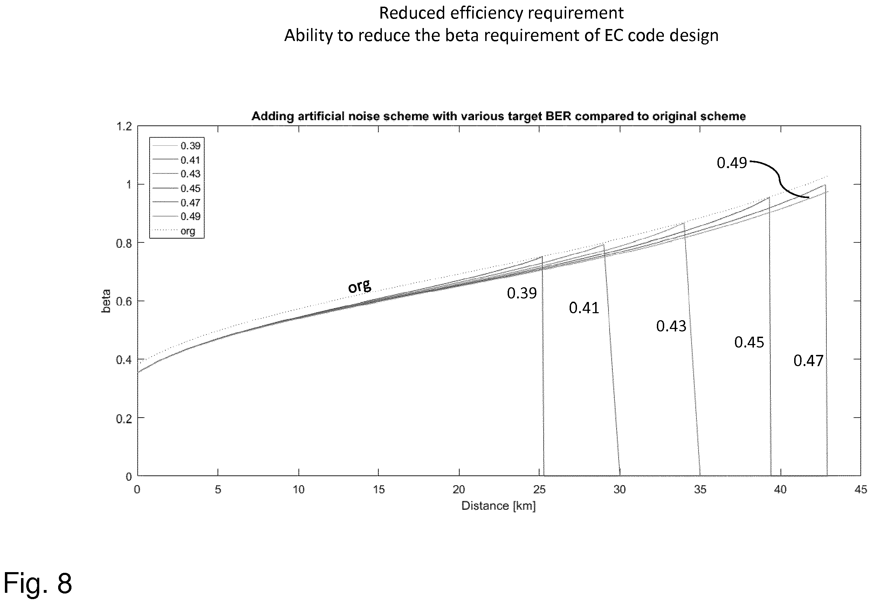

Figure 8 shows a schematic diagram illustrating a performance of the QKD communication device 102' according to an embodiment.

In QKD communication systems, especially in CV-QKD systems, a high efficiency EC code is often required. The efficiency of an EC code corresponds to how much information redundancy is used in order to correct errors in the original data due to noise at a certain level, compared to the minimum redundancy required theoretically. By adding the artificial noise, the design requirement of the EC code can be relaxed by reducing the efficiency (beta) needed to have non-zero keys, but at the cost of increasing the error correcting capability.

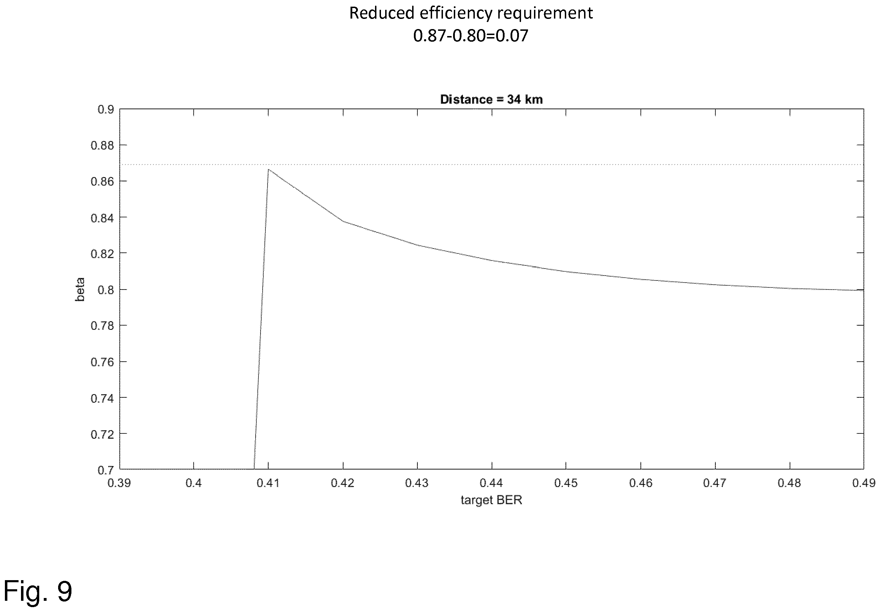

Figures 8 and 9 show that the efficiency of the EC code can be reduced with various levels of error correcting capability. For example, as shown in figure 8, the efficiency (beta) requirement of 0.87 can be reduced to 0.80 when this adding artificial noise idea is used. This has the advantage that the EC code may be easier to design.

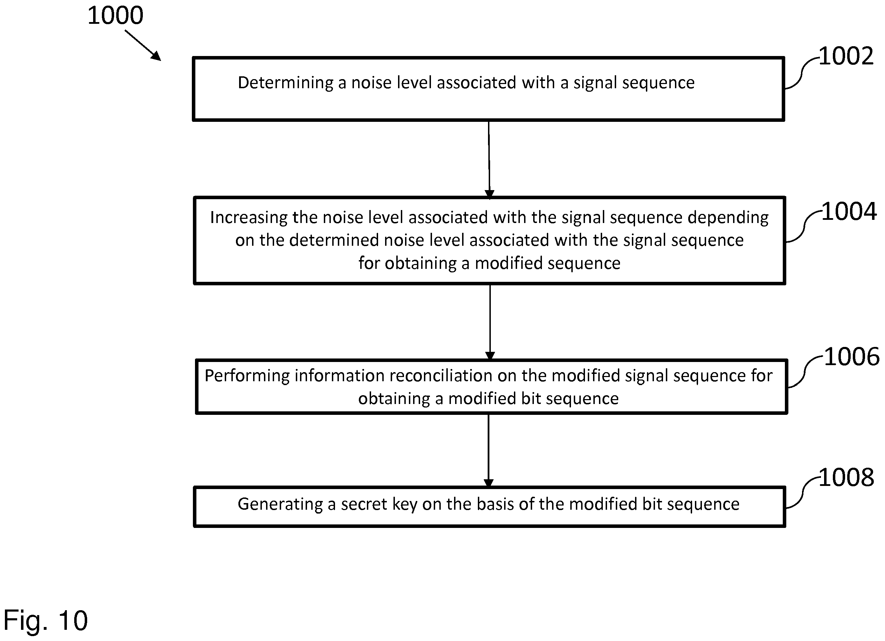

Figure 10 shows a schematic diagram of a method 1000 for generating a secret key on the basis of a signal sequence based on a plurality of quantum signals exchanged between a QKD communication device 102, 102' and a further QKD communication device 104, 104' via a quantum communication channel 110.

The method 1000 comprises the steps of determining 1002 a noise level associated with the signal sequence, increasing 1004 the noise level associated with the signal sequence depending on the determined noise level associated with the signal sequence for obtaining a modified signal sequence, performing 1006 information reconciliation on a bit sequence associated with the modified signal sequence for obtaining a modified bit sequence, and generating 1008 the secret key on the basis of the modified bit sequence.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A QKD communication device (102, 102') comprising:
a communication interface (102a, 102a') configured to communicate with a further QKD communication device (104, 104') for generating a secret key on the basis of a signal sequence associated with a plurality of quantum signals exchanged between the QKD communication device (102, 102') and the further QKD communication device (104, 104') via a quantum communication channel (110); and
a processing unit (102b, 102') configured to:
determine a noise level associated with the signal sequence;
**characterised in that** the processing unit is further configured to:
increase the noise level associated with the signal sequence depending on the determined noise level associated with the signal sequence for obtaining a modified signal sequence,
such that the noise level associated with the modified signal sequence is larger than a predefined noise threshold value and/or falls within a predefined noise range;
perform information reconciliation on the modified signal sequence for obtaining an error-free bit sequence; and
generate the secret key on the basis of the error-free bit sequence.

2. The QKD communication device (102, 102') of claim 1, wherein the processing unit (102b, 102b') is further configured to perform a sifting operation on the signal sequence prior to determining the noise level associated with the signal sequence.

3. The QKD communication device (102, 102') of claim 1 or 2, wherein the processing unit (102b, 102b') is configured to generate the secret key on the basis of the modified bit sequence using a privacy amplification scheme.

4. The QKD communication device (102, 102') of any one of the preceding claims, wherein the processing unit (102b, 102b') is configured to perform error correction on the bit sequence associated with the modified signal sequence by applying an information reconciliation scheme to the modified signal sequence, wherein the information reconciliation scheme is associated with a nominal operation noise level and/or a nominal operation noise level range and wherein the processing unit (102b, 102b') is configured to increase the noise level associated with the signal sequence depending on the determined noise level associated with the signal sequence and on the nominal operation noise level and/or the nominal operation noise level range associated with the information reconciliation scheme.

5. The QKD communication device (102, 102') of claim 4, wherein the processing unit (102b,102b') is configured to increase the noise level associated with the signal sequence such that the increased noise level associated with the signal sequence is substantially equal to the nominal operation noise level associated with the information reconciliation scheme and/or falls within the nominal operation noise level range associated with the information reconciliation scheme.

6. The QKD communication device (102, 102') of claim 4 or 5, wherein the noise level associated with a signal sequence is a bit error rate associated with the signal sequence and wherein the nominal operation noise level associated with the information reconciliation scheme is a nominal operation bit error rate associated with the information reconciliation scheme and/or the nominal operation noise level range associated with the information reconciliation scheme is a nominal operation bit error rate range associated with the information reconciliation scheme.

7. The QKD communication device (102, 102') of claim 4 or 5, wherein the noise level associated with a signal sequence is a signal-to-noise ratio associated with the signal sequence and wherein the nominal operation noise level associated with the information reconciliation scheme is a nominal operation signal-to-noise ratio associated with the information reconciliation scheme and/or the nominal operation noise level range associated with the information reconciliation scheme is a nominal operation signal-to-noise ratio range associated with the information reconciliation scheme.

8. The QKD communication device (102, 102') of any one of the preceding claims, wherein the processing unit (102b, 102b') is configured to increase the noise level associated with the signal sequence depending on the determined noise level associated with the signal sequence by flipping at least one bit equivalent of the signal sequence.

9. The QKD communication device (102, 102') of any one of the preceding claims, wherein the processing unit (102b, 102b') is configured to increase the noise level associated with the signal sequence depending on the determined noise level associated with the signal sequence by adding Gaussian noise to the signal sequence.

10. The QKD communication device (102') of any one of the preceding claims, wherein the QKD communication device (102') is a QKD receiver device and wherein the processing unit (102b') is configured to generate the secret key on the basis of the modified signal sequence using a reverse reconciliation scheme.

11. The QKD communication device (102.) of any one of claims 1 to 9, wherein the QKD communication device (102) is a QKD transmitter device and wherein the processing unit (102b) is configured to generate the secret key on the basis of the modified signal sequence using a direct reconciliation scheme.

12. A QKD communication system (100) comprising a QKD transmitter device (102) according to claim 11 and a QKD receiver device (104).

13. A QKD communication system (100') comprising a QKD transmitter device (104') and a QKD receiver device (102') according to claim 10.

14. A method (1000) for generating a secret key on the basis of a signal sequence associated with a plurality of quantum signals exchanged between the QKD communication device (102, 102') and the further QKD communication device (104, 104') via a quantum communication channel (110), comprising:
determining (1002) a noise level associated with the signal sequence; the method being **characterised by**:
increasing (1004) the noise level associated with the signal sequence depending on the determined noise level associated with the signal sequence for obtaining a modified signal sequence, such that the noise level associated with the modified signal sequence is larger than a predefined noise threshold value and/or falls within a predefined noise range;
performing (1006) information reconciliation on the modified signal sequence for obtaining a modified bit sequence; and
generating (1008) the secret key on the basis of the modified bit sequence.

15. The method (1000) of claim 14, wherein the step of applying (1006) error correction on a bit sequence associated with the modified signal sequence comprises applying an information reconciliation scheme to the modified signal sequence, wherein the information reconciliation scheme is associated with a nominal operation noise level and/or a nominal operation noise level range and wherein the step of increasing the noise level associated with the signal sequence depending on the determined noise level associated with the signal sequence comprises increasing the noise level associated with the signal sequence depending on the determined noise level associated with the signal sequence and on the nominal operation noise level and/or the nominal operation noise level range associated with the information reconciliation scheme.

16. The method (1000) of claim 15, wherein the noise level associated with the signal sequence is increased such that the increased noise level associated with the signal sequence is substantially equal to the nominal operation noise level associated with the information reconciliation scheme and/or falls within the nominal operation noise level range associated with the information reconciliation scheme.

17. A computer program product comprising a program code for performing the method (1000) of any one of claims 14 to 16, when executed on a computer or a processor.

## Patentansprüche

1. QKD-Kommunikationsvorrichtung (102, 102'), umfassend:
eine Kommunikationsschnittstelle (102a, 102a'), die dazu konfiguriert ist, mit einer weiteren QKD-Kommunikationsvorrichtung (104, 104') zum Erzeugen eines geheimen Schlüssels basierend auf einer Signalsequenz zu kommunizieren, die einer Vielzahl von Quantensignalen zugeordnet ist, welche zwischen der QKD-Kommunikationsvorrichtung (102, 102') und der weiteren QKD-Kommunikationsvorrichtung (104, 104') über einen Quantenkommunikationskanal (110) ausgetauscht werden; und
eine Verarbeitungseinheit (102b, 102'), die zu Folgendem konfiguriert ist:
Bestimmen eines der Signalsequenz zugeordneten Rauschpegels;
**dadurch gekennzeichnet, dass** die Verarbeitungseinheit ferner zu Folgendem konfiguriert ist:
Erhöhen des der Signalsequenz zugeordneten Rauschpegels in Abhängigkeit von dem der Signalsequenz zugeordneten bestimmten Rauschpegel zum Erlangen einer modifizierten Signalsequenz, sodass der der modifizierten Signalsequenz zugeordnete Rauschpegel über einem vordefinierten Rauschschwellenwert liegt und/oder in einen vordefinierten Rauschbereich fällt;
Durchführen eines Informationsabgleichs an der modifizierten Signalsequenz zum Erlangen einer fehlerfreien Bitsequenz; und
Erzeugen des geheimen Schlüssels auf Basis der fehlerfreien Bitsequenz.

2. QKD-Kommunikationsvorrichtung (102, 102') nach Anspruch 1, wobei die Verarbeitungseinheit (102b, 102b') ferner dazu konfiguriert ist, einen Sichtvorgang an der Signalsequenz vor dem Bestimmen des der Signalsequenz zugeordneten Rauschpegels durchzuführen.

3. QKD-Kommunikationsvorrichtung (102, 102') nach Anspruch 1 oder 2, wobei die Verarbeitungseinheit (102b, 102b') dazu konfiguriert ist, den geheimen Schlüssel basierend auf der modifizierten Bitsequenz unter Verwendung eines Geheimhaltungsverstärkungsschemas zu erzeugen.

4. QKD-Kommunikationsvorrichtung (102, 102') nach einem der vorhergehenden Ansprüche, wobei die Verarbeitungseinheit (102b, 102b') dazu konfiguriert ist, eine Fehlerkorrektur an der der modifizierten Signalsequenz zugeordneten Bitsequenz durchzuführen, indem ein Informationsabgleichsschemas an der modifizierten Signalsequenz angewendet wird, wobei das Informationsabgleichsschema einem nominalen Betriebsrauschpegel und/oder einem nominalen Betriebsrauschpegelbereich zugeordnet ist und wobei die Verarbeitungseinheit (102b, 102b') dazu konfiguriert ist, den der Signalsequenz zugeordneten Rauschpegel in Abhängigkeit von dem der Signalfrequenz zugeordneten bestimmten Rauschpegel und von dem nominalen Betriebsrauschpegel und/oder dem nominalen Betriebsrauschpegelbereich, der dem Informationsabgleichsschema zugeordnet ist, zu erhöhen.

5. QKD-Kommunikationsvorrichtung (102, 102') nach Anspruch 4, wobei die Verarbeitungseinheit (102b, 102b') dazu konfiguriert ist, den der Signalsequenz zugeordneten Rauschpegel derart zu erhöhen, dass der der Signalsequenz zugeordnete erhöhte Rauschpegel im Wesentlichen gleich dem dem Informationsabgleichsschema zugeordneten nominalen Betriebsrauschpegel ist und/oder in den dem Informationsabgleichsschema zugeordneten nominalen Betriebsrauschpegelbereich fällt.

6. QKD-Kommunikationsvorrichtung (102, 102') nach Anspruch 4 oder 5, wobei der einer Signalsequenz zugeordnete Rauschpegel eine der Signalsequenz zugeordnete Bitfehlerrate ist und wobei der dem Informationsabgleichsschema zugeordnete nominale Betriebsrauschpegel eine dem Informationsabgleichsschema zugeordnete nominale Betriebsbitfehlerrate ist und/oder der dem Informationsabgleichsschema zugeordnete nominale Betriebsrauschpegelbereich ein dem Informationsabgleichsschema zugeordneter nominaler Betriebsbitfehlerratenbereich ist.

7. QKD-Kommunikationsvorrichtung (102, 102') nach Anspruch 4 oder 5, wobei der einer Signalsequenz zugeordnete Rauschpegel ein der Signalsequenz zugeordneter Rauschabstand ist und wobei der dem Informationsabgleichsschema zugeordnete nominale Betriebsrauschpegel ein dem Informationsabgleichsschema zugeordneter nominaler Betriebsrauschabstand ist und/oder der dem Informationsabgleichsschema zugeordnete nominale Betriebsrauschpegelbereich ein dem Informationsabgleichsschema zugeordneter nominaler Betriebsrauschabstandsbereich ist.

8. QKD-Kommunikationsvorrichtung (102, 102') nach einem der vorhergehenden Ansprüche, wobei die Verarbeitungseinheit (102b, 102b') dazu konfiguriert ist, den der Signalsequenz zugeordneten Rauschpegel in Abhängigkeit von dem der Signalsequenz zugeordneten bestimmten Rauschpegel zu erhöhen, indem mindestens ein Bitäquivalent der Signalsequenz umgekehrt wird.

9. QKD-Kommunikationsvorrichtung (102, 102') nach einem der vorhergehenden Ansprüche, wobei die Verarbeitungseinheit (102b, 102b') dazu konfiguriert ist, den der Signalsequenz zugeordneten Rauschpegel in Abhängigkeit von dem der Signalsequenz zugeordneten bestimmten Rauschpegel zu erhöhen, indem mindestens der Signalsequenz Gaußsches Rauschen hinzugefügt wird.

10. QKD-Kommunikationsvorrichtung (102') nach einem der vorhergehenden Ansprüche, wobei die QKD-Kommunikationsvorrichtung (102') eine QKD-Empfängervorrichtung ist und wobei die Verarbeitungseinheit (102b') dazu konfiguriert ist, den geheimen Schlüssel basierend auf der modifizierten Signalsequenz unter Verwendung eines umgekehrten Abgleichsschemas zu erzeugen.

11. QKD-Kommunikationsvorrichtung (102) nach einem der Ansprüche 1 bis 9, wobei die QKD-Kommunikationsvorrichtung (102) eine QKD-Sendervorrichtung ist und wobei die Verarbeitungseinheit (102b) dazu konfiguriert ist, den geheimen Schlüssel basierend auf der modifizierten Signalsequenz unter Verwendung eines direkten Abgleichsschemas zu erzeugen.

12. QKD-Kommunikationssystem (100), umfassend eine QKD-Sendervorrichtung (102) nach Anspruch 11 und eine QKD-Empfängervorrichtung (104).

13. QKD-Kommunikationssystem (100'), umfassend eine QKD-Sendervorrichtung (104') und eine QKD-Empfängervorrichtung (102') nach Anspruch 10.

14. Verfahren (1000) zum Erzeugen eines geheimen Schlüssels basierend auf einer Signalsequenz, die einer Vielzahl von Quantensignalen zugeordnet ist, welche zwischen der QKD-Kommunikationsvorrichtung (102, 102') und der weiteren QKD-Kommunikationsvorrichtung (104, 104') über einen Quantenkommunikationskanal (110) ausgetauscht werden, umfassend:
Bestimmen (1002) eines der Signalsequenz zugeordneten Rauschpegels;
wobei das Verfahren durch Folgendes gekennzeichnet ist:
Erhöhen (1004) des der Signalsequenz zugeordneten Rauschpegels in Abhängigkeit von dem der Signalsequenz zugeordneten bestimmten Rauschpegel zum Erlangen einer modifizierten Signalsequenz, sodass der der modifizierten Signalsequenz zugeordnete Rauschpegel über einem vordefinierten Rauschschwellenwert liegt und/oder in einen vordefinierten Rauschbereich fällt;
Durchführen (1006) eines Informationsabgleichs an der modifizierten Signalsequenz zum Erlangen einer fehlerfreien Bitsequenz; und
Erzeugen (1008) des geheimen Schlüssels basierend auf der modifizierten Bitsequenz.

15. Verfahren (1000) nach Anspruch 14, wobei der Schritt des Anwendens (1006) einer Fehlerkorrektur an der der modifizierten Signalsequenz zugeordneten Bitsequenz das Anwenden eines Informationsabgleichsschemas an der modifizierten Signalsequenz umfasst, wobei das Informationsabgleichsschema einem nominalen Betriebsrauschpegel und/oder einem nominalen Betriebsrauschpegelbereich zugeordnet ist und wobei der Schritt des Erhöhens des der Signalsequenz zugeordneten Rauschpegels in Abhängigkeit von dem der Signalfrequenz zugeordneten bestimmten Rauschpegel das Erhöhen des der Signalsequenz zugeordneten Rauschpegels in Abhängigkeit von dem der Signalfrequenz zugeordneten bestimmten Rauschpegel und von dem nominalen Betriebsrauschpegel und/oder dem nominalen Betriebsrauschpegelbereich, der dem Informationsabgleichsschema zugeordnet ist, umfasst.

16. Verfahren (1000) nach Anspruch 15, wobei der der Signalsequenz zugeordnete Rauschpegel derart erhöht wird, dass der der Signalsequenz zugeordnete erhöhte Rauschpegel im Wesentlichen gleich dem dem Informationsabgleichsschema zugeordneten nominalen Betriebsrauschpegel ist und/oder in den dem Informationsabgleichsschema zugeordneten nominalen Betriebsrauschpegelbereich fällt.

17. Computerprogrammprodukt, umfassend einen Programmcode zum Durchführen des Verfahrens (1000) nach einem der Ansprüche 14 bis 16 bei Ausführung auf einem Computer oder einem Prozessor.

## Revendications

1. Dispositif de communication QKD (102, 102'), comprenant :
une interface de communication (102a, 102a') conçue pour communiquer avec un autre dispositif de communication QKD (104, 104') pour générer une clé secrète sur la base d'une séquence de signaux associée à une pluralité de signaux quantiques échangés entre le dispositif de communication QKD ( 102, 102') et l'autre dispositif de communication QKD (104, 104') par le biais d'un canal de communication quantique (110) ; et
une unité de traitement (102b, 102') conçue pour :
déterminer un niveau de bruit associé à la séquence de signaux ;
**caractérisé en ce que** l'unité de traitement est en outre conçue pour :
augmenter le niveau de bruit associé à la séquence de signaux en fonction du niveau de bruit déterminé associé à la séquence de signaux pour obtenir une séquence de signaux modifiée, de sorte que le niveau de bruit associé à la séquence de signaux modifiée est supérieur à une valeur seuil de bruit prédéfinie et/ou tombe dans une plage de bruit prédéfinie ;
effectuer un rapprochement d'informations sur la séquence de signaux modifiée pour obtenir une séquence de bits sans erreur ; et
générer la clé secrète sur la base de la séquence de bits sans erreur.

2. Dispositif de communication QKD (102, 102') selon la revendication 1, dans lequel l'unité de traitement (102b, 102b') est en outre conçue pour effectuer une opération de filtrage sur la séquence de signaux avant de déterminer le niveau de bruit associé à la séquence de signaux.

3. Dispositif de communication QKD (102, 102') selon la revendication 1 ou 2, dans lequel l'unité de traitement (102b, 102b') est conçue pour générer la clé secrète sur la base de la séquence de bits modifiée à l'aide d'un schéma d'amplification de confidentialité.

4. Dispositif de communication QKD (102, 102') selon l'une quelconque des revendications précédentes, dans lequel l'unité de traitement (102b, 102b') est conçue pour effectuer une correction d'erreur sur la séquence de bits associée à la séquence de signaux modifiée en appliquant un schéma de rapprochement d'informations à la séquence de signaux modifiée, dans lequel le schéma de rapprochement d'informations est associé à un niveau de bruit de fonctionnement nominal et/ou à une plage de niveaux de bruit de fonctionnement nominal et dans lequel l'unité de traitement (102b, 102b') est conçue pour augmenter le niveau de bruit associé à la séquence de signaux en fonction du niveau de bruit déterminé associé à la séquence de signaux et du niveau de bruit de fonctionnement nominal et/ou de la plage de niveaux de bruit de fonctionnement nominal associés au schéma de rapprochement d'informations.

5. Dispositif de communication QKD (102, 102') selon la revendication 4, dans lequel l'unité de traitement (102b, 102b') est conçue pour augmenter le niveau de bruit associé à la séquence de signaux de sorte que le niveau de bruit accru associé à la séquence de signaux est sensiblement égal au niveau de bruit de fonctionnement nominal associé au schéma de rapprochement d'informations et/ou tombe dans la plage de niveaux de bruit de fonctionnement nominal associée au schéma de rapprochement d'informations.

6. Dispositif de communication QKD (102, 102') selon la revendication 4 ou 5, dans lequel le niveau de bruit associé à une séquence de signaux est un taux d'erreur sur les bits associé à la séquence de signaux et dans lequel le niveau de bruit de fonctionnement nominal associé au schéma de rapprochement d'informations est un taux d'erreur sur les bits de fonctionnement nominal associé au schéma de rapprochement d'informations et/ou la plage de niveaux de bruit de fonctionnement nominal associée au schéma de rapprochement d'informations est une plage de taux d'erreur sur les bits de fonctionnement nominal associée au schéma de rapprochement d'informations.

7. Dispositif de communication QKD (102, 102') selon la revendication 4 ou 5, dans lequel le niveau de bruit associé à une séquence de signaux est un rapport signal sur bruit associé à la séquence de signaux et dans lequel le niveau de bruit de fonctionnement nominal associé au schéma de rapprochement d'informations est un rapport signal sur bruit de fonctionnement nominal associé au schéma de rapprochement d'informations et/ou la plage de niveaux de bruit de fonctionnement nominal associée au schéma de rapprochement d'informations est une plage de rapport signal sur bruit de fonctionnement nominal associée au schéma de rapprochement d'informations.

8. Dispositif de communication QKD (102, 102') selon l'une quelconque des revendications précédentes, dans lequel l'unité de traitement (102b, 102b') est conçue pour augmenter le niveau de bruit associé à la séquence de signaux en fonction du niveau de bruit déterminé associé à la séquence de signaux en retournant au moins un équivalent binaire de la séquence de signaux.

9. Dispositif de communication QKD (102, 102') selon l'une quelconque des revendications précédentes, dans lequel l'unité de traitement (102b, 102b') est conçue pour augmenter le niveau de bruit associé à la séquence de signaux en fonction du niveau de bruit déterminé associé à la séquence de signaux en ajoutant un bruit gaussien à la séquence de signaux.

10. Dispositif de communication QKD (102') selon l'une quelconque des revendications précédentes, dans lequel le dispositif de communication QKD (102') est un dispositif récepteur QKD et dans lequel l'unité de traitement (102b') est conçue pour générer la clé secrète sur la base de la séquence de signaux modifiée à l'aide d'un schéma de rapprochement inverse.

11. Dispositif de communication QKD (102) selon l'une quelconque des revendications 1 à 9, dans lequel le dispositif de communication QKD (102) est un dispositif émetteur QKD et dans lequel l'unité de traitement (102b) est conçue pour générer la clé secrète sur la base de la séquence de signaux modifiée à l'aide d'un schéma de rapprochement direct.

12. Système de communication QKD (100) comprenant un dispositif émetteur QKD (102) selon la revendication 11 et un dispositif récepteur QKD (104).

13. Système de communication QKD (100') comprenant un dispositif émetteur QKD (104') et un dispositif récepteur QKD (102') selon la revendication 10.

14. Procédé (1000) destiné à générer une clé secrète sur la base d'une séquence de signaux associée à une pluralité de signaux quantiques échangés entre le dispositif de communication QKD (102, 102') et l'autre dispositif de communication QKD (104, 104') par le biais d'un canal de communication quantique (110), comprenant :
la détermination (1002) d'un niveau de bruit associé à la séquence de signaux ;
le procédé étant **caractérisé par** :
l'augmentation (1004) du niveau de bruit associé à la séquence de signaux en fonction du niveau de bruit déterminé associé à la séquence de signaux pour obtenir une séquence de signaux modifiée, de sorte que le niveau de bruit associé à la séquence de signaux modifiée est supérieur à une valeur seuil de bruit prédéfinie et/ou tombe dans une plage de bruit prédéfinie ;
la réalisation (1006) d'un rapprochement d'informations sur la séquence de signaux modifiée pour obtenir une séquence de bits modifiée ; et
la génération (1008) de la clé secrète sur la base de la séquence de bits modifiée.

15. Procédé (1000) selon la revendication 14, dans lequel l'étape d'application (1006) d'une correction d'erreur sur une séquence de bits associée à la séquence de signaux modifiée comprend l'application d'un schéma de rapprochement d'informations à la séquence de signaux modifiée, dans lequel le schéma de rapprochement d'informations est associé à un niveau de bruit de fonctionnement nominal et/ou une plage de niveaux de bruit de fonctionnement nominal et dans lequel l'étape d'augmentation du niveau de bruit associé à la séquence de signaux en fonction du niveau de bruit déterminé associé à la séquence de signaux comprend l'augmentation du niveau de bruit associé à la séquence de signaux en fonction du niveau de bruit déterminé associé à la séquence de signaux et du niveau de bruit de fonctionnement nominal et/ou de la plage de niveaux de bruit de fonctionnement nominal associée au schéma de rapprochement d'informations.

16. Procédé (1000) selon la revendication 15, dans lequel le niveau de bruit associé à la séquence de signaux est augmenté de sorte que le niveau de bruit accru associé à la séquence de signaux est sensiblement égal au niveau de bruit de fonctionnement nominal associé au schéma de rapprochement d'informations et/ou tombe dans la plage de niveaux de bruit de fonctionnement nominal associée au schéma de rapprochement d'informations.

17. Produit de programme informatique comprenant un code de programme pour exécuter le procédé (1000) selon l'une quelconque des revendications 14 à 16, lorsqu'il est exécuté sur un ordinateur ou un processeur.
